# EUROPEAN PATENT APPLICATION

(11) **EP 2 015 001 A2**
(43) Date of publication of application: **14.01.2009**
(21) Application number: 08380208.2
(22) Date of filing: 09.07.2008
(51) Int. Cl.: F24J 2/34

(54) **A shower with solar collector**

(30) Priority: 13.07.2007 ES 200701512 U
(71) Applicant: Metalast, S.A. (Sociedad Unipersonal), 08213 Polinya, (Barcelona) (ES)
(72) Inventor: Gimenez Pallares, David, 08213 Polinya (Barcelona) (ES); Morral Gispert, Jaume, 08213 Polinya (Barcelona) (ES); Ortega Solano, Evaristo, 08213 Polinya (Barcelona) (ES)
(74) Representative: Pastells Teixido, Manuel

(57) **Abstract**

It comprises a longitudinal support (1) being provided with the fittings being characteristic of a shower, the solar collector (4) being made up by a black and flexible, tubular reservoir (5) being longitudinally fitted to said longitudinal support. It is characterised in that the solar collector (4) is fitted to the support (1) in such a way that it comes to rest at its lower end and has its upper end fitted in a shiftable assembly. Three half-clamps (16, 17 and 18) are laterally applied to the solar collector (4) and fitted to the support (1) at its two ends and in an intermediary region, at least part of said half-clamps being fitted in a removable assembly. The support (1) is formed by two halves namely being an upper one (12) and a lower one (14), said two halves being adapted to be fitted (15) to each other.

## Description

### OBJECT OF THE INVENTION

A shower with solar collector.

### FIELD OF THE INVENTION

This solar shower is designed for showering in the open air both at swimming pools or on the beach.

### BACKGROUND OF THE INVENTION

Several models of showers being provided with a tubular solar collector are already known, there being two types of solar collectors, those of one of said types being rigid and of metallic make-up, whereas those of the other type have a flexible make-up, all of them having a black finish, at least on the outside, so as to better absorb the solar heat irradiation and/or the ambient temperature.

The solar collector is fitted to a longitudinal support being arranged in a vertical or slightly inclined arrangement and comprising the fittings being characteristic of a shower, such as the corresponding piping, the cocks for the hot and cold water, and the sprinkler or dripper.

### SUMMARY OF THE INVENTION

It is the object of this invention to provide the showers having a solar collector of a flexible type with improvements allowing to avoid the problem of the longitudinal expansion of the tube when heated and providing a disassemblable structure allowing to have them folded so as to thus facilitate their storage and transportation.

In order to solve the problem of the longitudinal expansion of the flexible tube making up the solar collector this latter is fitted to the support in such a way that it comes to rest at its lower end and has its upper end fitted in a shiftable assembly.

The disassemblable structure is made up by two support halves namely being an upper and a lower one and by three half-clamps being laterally applied to the solar collector and fitted to the two ends of the support and to an intermediary region of this latter, said fitting for at least part of them being carried out in a removable assembly.

These and other characterising features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:

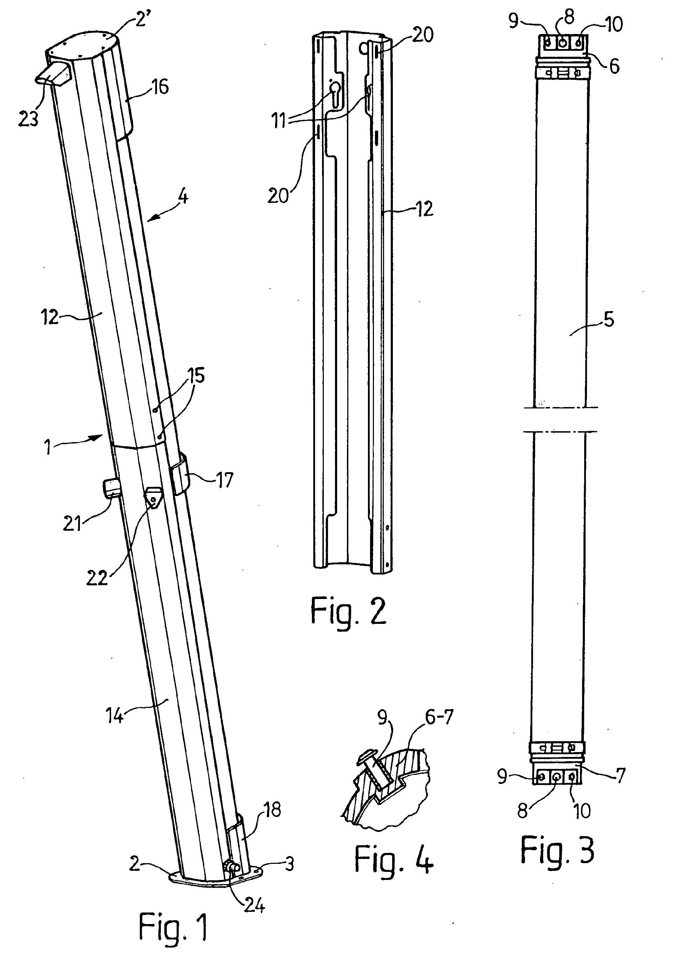

Fig. 1 illustrates this novel shower in a perspective view;
Fig. 2 is a perspective view of the upper half of the support;
Fig. 3 shows the solar collector in an elevational view;
Fig. 4 is a plan-view detail of the fitting elements for fitting the solar collector to the support;

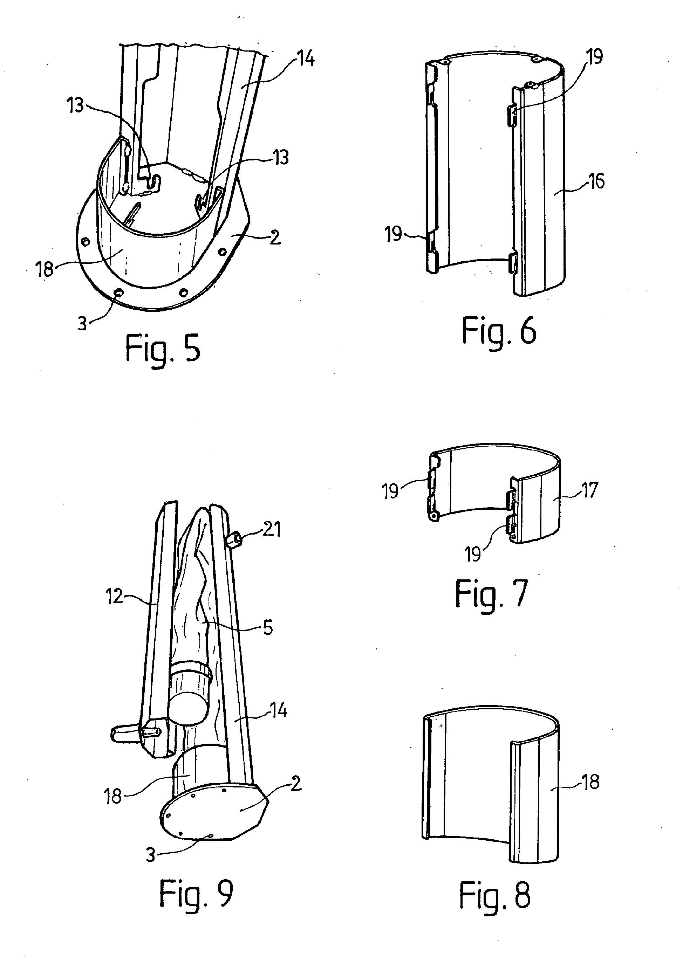

Fig. 5 is a perspective view of a detail of the lower half of the support with its corresponding half-clamp;
Figs. 6, 7 and 8 depict in a perspective view the upper, intermediary and lower half-clamps, respectively; and
Fig. 9 illustrates in a perspective view the shower having been folded for its ulterior packaging.

### DETAILED DESCRIPTION

According to the drawings this shower comprises a longitudinal and slightly inclined support (1) being welded to a base (2) with holes (3) for the passage of the screws that are to be used for securedly fastening the shower to the ground, said shower being as well provided with an upper cover (2').

The solar collector (4) is fitted to this support, said solar collector being made up by a black tube (5) being made of flexible plastics material and at each of its ends having fixedly attached to it a respective cap (6 and 7) with lateral orifice (8) for the water inflow and outflow.

Two screws (9 and 10) are radially fixed in these caps and are used for upperly fitting the solar collector in a shiftable assembly in respective slits (11) being provided in the upper half (12) of the support (1) and for fitting said solar collector in respective notches (13) being provided in the lower half (14) of the support (1) where it comes to rest.

These two halves (12 and 14) of the support (1) are fitted to each other with screws (15).

The shower structure furthermore comprises three half-clamps (16, 17 and 18), the upper one and the intermediary one being fitted to the support in a removable assembly by means of hooks (19) being introduced into slits (20) being provided in the support (1), and the lower one being fixedly attached to this latter by means of welding.

These half-clamps are laterally applied to the solar collector (4) in a loose manner in order to thus allow it to experience a free radial expansion.

The support (1) will innerly comprise the hot and cold water pipes with the corresponding cocks (21, 22) and will upperly comprise the sprinkler or dripper (23). A quick-connection type coupling for the water is designated at (24).

## Claims

1. A shower with solar collector comprising a longitudinal support (1) being provided with the fittings being characteristic of a shower, the solar collector (4) being made up by a black and flexible, tubular reservoir (5) being longitudinally fitted to said longitudinal support; **characterised in that** the solar collector (4) is fitted to the support (1) in such a way that it comes to rest at its lower end and has its upper end fitted in a shiftable assembly.

2. A shower with solar collector, as per claim 1, **characterised in that** three half-clamps (16, 17 and 18) are laterally applied to the solar collector (4) and fitted to the support (1) at its two ends and in an intermediary region, at least part of said half-clamps being fitted in a removable assembly.

3. A shower with solar collector, as per claim 1, **characterised in that** the support (1) is formed by two halves namely being an upper one (12) and a lower one (14), said two halves being adapted to be fitted (15) to each other.
